(19) Europäisches Patentamt
European Patent Office
Office européen des brevets

(11) **EP 0 924 268 B1**

(12) **EUROPÄISCHE PATENTSCHRIFT**

(45) Veröffentlichungstag und Bekanntmachung des Hinweises auf die Patenterteilung:
**09.07.2003 Patentblatt 2003/28**

(51) Int Cl.[7]: **C09C 1/58**, C08J 3/22, C08J 3/21, C08L 91/06

(21) Anmeldenummer: **98123729.0**

(22) Anmeldetag: **14.12.1998**

(54) **Perlruss und Verfahren zu seiner Herstellung**

Pearly carbon black and process for its preparation

Noir de carbone sous forme de perles et procédé pour sa préparation

(84) Benannte Vertragsstaaten:
**DE ES FR GB IT NL PT**

(30) Priorität: **18.12.1997 DE 19756501**

(43) Veröffentlichungstag der Anmeldung:
**23.06.1999 Patentblatt 1999/25**

(73) Patentinhaber: **Degussa AG**
**40474 Düsseldorf (DE)**

(72) Erfinder:
• **Vogler, Conny Dr.**
  **53332 Bornheim-Sechtem (DE)**
• **Vogel, Karl Dr.**
  **63755 Alzenau-Michelbach (DE)**
• **Wieschnowsky, Udo Dr.**
  **50169 Kerpen-Brüggen (DE)**
• **Kopietz, Jan**
  **58730 Fröndenberg (DE)**

(56) Entgegenhaltungen:
EP-A- 0 424 896        EP-A- 0 814 133
WO-A-96/01875

• **MEDNIKOV M.M. ET AL: 'The use of PE in the dry pelletisation of carbon black' INTERNATIONAL POLYMER SCIENCE AND TECHNOLOGY Bd. 9, Nr. 1, 1982, Seiten T37 - T39, XP000945050**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft einen Perlruß mit guter Dispergierbarkeit und hoher Perlhärte sowie ein Verfahren zu seiner Herstellung.

Bei der Verarbeitung von Industrierußen werden vorzugsweise granulierte Produkte eingesetzt, die häufig als Rußgranulat, Perlruß oder pelletierter Ruß bezeichnet werden. Zur Granulation oder Verperlung der Ruße werden derzeit großtechnisch zwei unterschiedliche Verfahren verwendet: die Naßverperlung in einer Perlmaschine mit anschließender Trocknung und die Trockenverperlung in einer Perltrommel. Beide Verfahren haben deutlich unterschiedliche Prozeßparameter, die in engem Zusammenhang mit den physikalischen Vorgängen bei der jeweiligen Agglomeration und mit den resultierenden Perleigenschaften stehen.

Für die Naßgranulation werden als Perlmaschinen Granulatoren mit Stachelwelle eingesetzt. Sie bestehen aus einem liegend angeordneten feststehenden Rohr (im folgenden auch als Stator bezeichnet) mit einer darin sich drehenden Stachelwelle. Zwischen der Achse der Stachelwelle und der Rohrwandung befindet sich der für die Granulation zur Verfügung stehende Perlraum. Im Perlraum wird der Ruß vom Einlauf am einen Ende des Rohres zum Auslauf am anderen Ende des Rohres durch die sich drehende Stachelwelle befördert. Dabei erfolgt die Agglomeration durch Abrollen des Rußes an der stehenden Rohrwandung. Die Verweilzeit des Rußes in der Perlmaschine kann durch Anbringen einer Stauscheibe am Auslauf oder durch Anheben des Auslauf gegenüber dem Einlauf verlängert werden. Typische Perlmaschinen haben eine Länge von 1 bis 3,5 m und Durchmesser zwischen 200 und 760 mm.

In der Perlmaschine wird der pulverförmige Industrieruß mit Wasser, gegebenenfalls unter Zusatz eines Bindemittels, intensiv gemischt. Je nach Rußsorte werden bei Wassergehalten zwischen 40 und 60 Gew.-% bezogen auf das Gesamtgewicht kugelförmige Rußperlen erhalten. Die feuchten Perlen werden anschließend in einem weiteren Verfahrensschritt getrocknet.

Bei der Naßverperlung erfolgt die Agglomeration durch Flüssigkeitsbrücken und Kapillarkräfte zwischen den Rußpartikeln. Die Größe der Kapillarkräfte erlaubt vergleichsweise hohe Umfangsgeschwindigkeiten von 10 bis 20 m/s an den Stachelspitzen, wodurch eine intensive Vermischung und die nachfolgende Perlbildung bewirkt werden.

Die notwendige Verweilzeit für eine gute Ausbildung der Rußperlen liegt bei der Naßverperlung im Bereich von wenigen Sekunden, gewöhnlich unter 20 Sekunden. Durch eine Stauscheibe oder durch Anheben des Auslaufs gegenüber dem Einlauf kann die Verweilzeit bis in den Bereich von einigen Minuten verlängert werden.

Die erzielbare Perlhärte der durch Naßverperlung erhaltenen Rußperlen liegt ohne Einsatz von Bindemitteln im Bereich zwischen 0,1 bis 0,3 N bei Perldurchmessern zwischen 1,4 und 1,7 mm. Zur Erhöhung der Perlhärte wird dem Perlwasser ein löslicher, fester Stoff (Perlhilfsmittel) zugesetzt, der nach der Trocknung im Perlruß verbleibt. Durch die intensive Benetzung des Rußes sowie durch die homogene Auflösung des Perlhilfsmittels im Perlwasser wird das Perlhilfsmittel optimal verteilt und kann seine festigende Wirkung voll entfalten.

Für die Trockenverperlung werden Perltrommeln eingesetzt, die aus einem ebenfalls liegend angeordneten sich drehenden Rohr bestehen. Der Innenraum des Rohres wird als Perlraum bezeichnet. Zur Granulation wird der pulverförmige Industrieruß zum Beispiel gemäß DE 38 32 404 vorverdichtet und in der Perltrommel durch Abrollen an der sich drehenden Rohrwand granuliert. Die für die Trockenverperlung verantwortlichen Van-Der-Waals und elektrostatischen Kräfte sind wesentlich geringer als die bei der Naßverperlung wirkenden Kapillarkräfte. Dementsprechend schonend muß die Granulation durchgeführt werden. Die Umfangsgeschwindigkeit der Perltrommel liegt daher nur bei 1 bis 2 m/s. Bei deutlich höheren Umfangsgeschwindigkeiten unterbleibt die Abrollbewegung aufgrund der hohen Zentrifugalkraft. Weiterhin ist die Krafteinwirkung auf die sich bildenden Perlen so groß, daß diese sofort wieder zerstört werden. Die erzielbare Perlhärte liegt gewöhnlich unter 0,1 N bei Perldurchmessern von 1,4 bis 1,7 mm.

Wegen der niedrigen Van-Der-Waals-Kräfte ist es zur Einleitung der Granulation förderlich, dem Ruß Impfgut in Form von vorverdichtetem Ruß zuzugeben. Das Impfgut wird vor Beginn in die Perltrommel gegeben oder kontinuierlich während des Betriebs der Perltrommel in einer Menge von 1 bis 30 Gew.-% bezogen auf die Menge des Pulverrußes zugeführt. Das Impfgut sorgt dafür, daß die für die Agglomeration notwendigen Keime stets in ausreichender Menge zur Verfügung stehen. Bei fehlender Zugabe von Impfgut kann es zum Ausbleiben der Trockengranulation oder zum Perlzusammenbruch kommen.

Die typische Verweilzeit des Rußes in der Trockenperltrommel beträgt 1 bis 4 Stunden. Um einen ausreichenden Rußdurchsatz (in Kg/h) zu gewährleisten, müssen Trockenperltrommeln wesentlich größer als Perlmaschinen für die Naßverperlung sein. In der Produktion werden Trockenperltrommeln mit Durchmessern von 2 m und Längen von 18 m eingesetzt. Die Füllmengen solcher Trommeln liegen bei mehreren Tonnen. Dagegen betragen die Füllmengen von Perlmaschinen nur wenige Kilogramm.

Sowohl bei der Naß- als auch bei der Trockenverperlung können Zusatzstoffe zur Erhöhung der Perlhärte und/oder zum Verbessern der Dispergierbarkeit eingesetzt werden.

Naß verperlte Ruße weisen wegen ihrer größeren Perlhärte im allgemeinen auch eine größere Dispergierhärte als trockengranulierte Ruße auf. Sie werden daher hauptsächlich in der Gummi-Industrie eingesetzt. In den hoch viskosen Kautschukmassen lassen sich die naß granulierten Ruße gut dispergieren. Ihre große Perlhärte erlaubt einen leichten Transport in pneumatischen Förderanlagen.

Trocken verperlte Ruße kommen hauptsächlich als Pigmente in Lacken und Kunststoffen zur Anwendung. In diesen Anwendungsfeldern kommen jedoch auch noch in großen Mengen Pulverruße zum Einsatz, welche bei ihrer Handhabung zu einer großen Staubbelästigung am Arbeitsplatz führen können. Diese Staubbelästigung kann nur durch die Verwendung verperlter Ruße vermindert werden.

In der WO 96/01875 wird der Einsatz von organischen Verbindungen zur Herstellung von Perlruß beschrieben, welcher abriebfest und gut dispergierbar ist. Geeignete organische Verbindungen sind nicht-polymere organische Verbindungen, thermoplastische Homopolymere, thermoplastischen Copolymere oder ein Wax. Diese Substanzen werden in Mengen von 10 bis 48 Gew.-% bei der Verperlung dem Ruß zugesetzt. Die Verperlung kann in Perlmaschinen und in Perltrommeln erfolgen. Die Perlbildung erfolgt gemäß dieser Schrift in ähnlicher Weise wie bei der Naßverperlung durch die Verstärkung der kohäsiven Kräfte zwischen den Rußteilchen infolge der geschmolzenen organischen Stoffe. Dementsprechend werden bei Verwendung von Perlmaschinen diese mit den gleichen Verfahrensparametern betrieben wie bei der konventionellen Naßverperlung. Ohne den Zusatz der organischen Stoffe werden gemäß der WO 96/01875 keine Rußperlen erhalten. Die minimale Zugabe an organischen Stoffen liegt bei Verperlung in einer Perlmaschine mit Stachelwelle, abhängig vom DBP-Wert des Rußpulvers, bei etwa 29 Gew.-%, typischer Weise jedoch bei 38,5 Gew.-%. Die Zugabe der organischen Stoffe zum Ruß wird gemäß der WO-Schrift zum Beispiel durch Versprühen mit Hilfe einer Druckdüse vorgenommen.

Die WO 96/21698 beschreibt die Naßverperlung von Ruß in einer Perlmaschine mit Hilfe einer wäßrigen Lösung eines organischen Bindemittels. Die gebildeten Rußperlen müssen zur Entfernung des Wassers bei Temperaturen getrocknet werden, bei denen das organische Bindemittel sich noch nicht zersetzt. Der Gehalt des getrockneten Perlrußes an Bindemittel beträgt 0,1 bis 50 Gew.-%.

Aus EP 0 424 896 ist ein staubarmes, leicht zu desagglomerierendes Feingranulat aus Pigment oder Farbstoff zur homogenen und farbechten Einfärbung von thermoplastischen Kunststoffen bekannt.

Ferner ist aus EP 0 814 133 ein Verfahren zur kontinuierlichen Trockengranulation von Pulverruß bekannt.

Aus M.M. Mednikov, 'Use of PE in dry pelletization of carbon black', International Polymer Science and Technology, 1982, Band 9, Nr. 1, Seiten T/37-T/39 ist ein granulierter Pulverruß mit einem Gehalt an Polyethylen von 0,5 bis 5 Gew.-% bekannt. Der Ruß wird hergestellt durch Aufbringen von Polyethylen und anschließende Verperlung des Rußes in einer Perltrommel.

Aufgabe der vorliegenden Erfindung ist es, Perlruße anzugeben, die verbesserte anwendungstechnische Eigenschaften besitzen und die sich mit einem geringen Energieaufwand herstellen lassen. Es wird ein Perlruß angestrebt, der durch Verwendung von Zusatzstoffen bei der Verperlung eine höhere Härte der Rußperlen bei gleichzeitig gutem Dispergierverhalten aufweist und einen nur geringen Staubanteil besitzt.

Diese Aufgabe wird durch einen Perlruß gelöst, welcher wenigstens ein Paraffinwach enthält und der durch Verperlen eines pulverförmigen Ausgangsruβes gewonnen wurde. Der Perlruß ist dadurch gekennzeichnet, daß sein Gehalt an Wachsen 1 bis weniger als 10 Gew.-%, bezogen auf sein Gesamtgewicht, beträgt und daß seine Einzelperlhärte größer als 0,15 N ist.

Der erfindungsgemäße Perlruß läßt sich vorteilhaft als Füllstoff in Gummi- und Kunststoffartikeln sowie als Pigment für die Herstellung von Druckfarben einsetzen. Er zeichnet sich infolge seiner günstigen Perlhärte durch gute Transport- und Dosiereigenschaften aus und läßt sich leicht wieder dispergieren.

Die zur Herstellung des Rußes verwendeten Wachse können sowohl natürlichen als auch synthetischen Ursprungs sein. Einen guten Überblick über die gemäß der Erfindung geeigneten Wachse gibt Ullmann's Encyclopedia of Industrial Chemistry, Vol. A28, Seiten 103 bis 163 von 1996. Bevorzugt werden solche Wachse verwendet, die zur Herstellung der Fertigprodukte, in die der Perlruß eingearbeitet werden soll, sowieso benötigt werden. Hierbei erweist sich der geringe Wachsgehalt des Perlrußes von weniger als 10 Gew.-% als Vorteil gegenüber den aus dem Stand der Technik bekannten wachshaltigen Perlrußen. Der durch den Perlruß in das Fertigprodukt eingebrachte Wachsanteil kann daher zumeist geringer gehalten werden, als der im Fertigprodukt benötigte Wachsgehalt. Dadurch wird die Freiheit bezüglich des Wachsgehaltes im Fertigprodukt durch den Perlruß kaum eingeschränkt.

Als Ausgangsruß für den erfindungsgemäßen Perlruß kann je nach Anwendungserfordernis aus einer großen Palette von bekannten Rußen ausgewählt. So kann die DBP-Adsorption des Ausgangsrußes in einem Bereich zwischen 40 und 250 ml/g und seine Stickstoff-Oberfläche zwischen 5 und 500 $m^2$/g variieren.

Der erfindungsgemäße Ruß wird bevorzugt durch Trockenverperlen in einer Perlmaschine, wie sie normalerweise beim Naßverperlen eingesetzt wird, hergestellt. Damit die Trockenverperlung in einer Perlmaschine möglich ist, müssen die Betriebsparameter in geeigneter Weise an die Erfordernisse der Trockenverperlung angepaßt werden.

Beim Naßverperlen wird mit hohen Drehzahlen der Stachelwelle von mehr als 500 $min^{-1}$ gearbeitet, was zu einer Umfangsgeschwindigkeit der Stachelspitzen zwischen 10 und 20 m/s führt. Dadurch erfolgt eine hohe Krafteinwirkung auf den Ruß, die eine Perlbildung verhindert, wenn versucht wird, Ruß trocken zu verperlen.

Für die Herstellung des erfindungsgemäßen Perlrußes wird die Drehzahl der Stachelwelle soweit herabgesetzt, daß die Umfangsgeschwindigkeit der Stachelspitzen Werte zwischen 1 und 6 m/s annimmt. Es hat sich gezeigt, daß in diesem Fall schon eine spontane Agglomeration des Rußes ohne die Zugabe von Flüssigkeit oder Perlhilfsmitteln einsetzt, wenn die mittlere Verweilzeit des Rußes in der Perlmaschine auf einen Wert zwischen 20 und 600 Sekunden eingestellt wird.

Die spontane Agglomeration des Ausgangsrußes wird durch die Zugabe von geschmolzenem Wachs oder einer geschmolzenen Wachsmischung verstärkt. Die Zugabe des Wachses macht es erforderlich, die gesamte Perlmaschine auf eine Temperatur zu erwärmen, die 10 bis 20% über der Schmelztemperatur des jeweiligen Wachses liegt, um ein Verkleben des Rußes an den Wänden und Einbauten der Perlmaschine zu verhindern.

Die Art der Zugabe des Wachses ist von großem Einfluß auf die Qualität des fertigen Perlrußes. Es hat sich gezeigt, daß die gewünschte Perlhärte von mehr als 0,15 N nur dann mit einem Gehalt des fertigen Perlrußes von weniger als 10 Gew.-% erzielt werden kann, wenn der Wachs über den pulverförmigen Ausgangsruß sehr fein mit einer mittleren Tröpfchengröße von weniger als 50 μm verdüst wird. Bei einer größeren mittleren Tröpfchengröße wird der Wachs nicht mehr homogen genug im Ruß verteilt, was dazu führt, daß ein höherer Wachsgehalt zur Erzielung einer vorgegebenen Perlhärte notwendig ist.

Zur Verdüsung des Wachses wird er zunächst durch Erwärmen auf eine Temperatur, welche 10 bis 20% über seiner Schmelztemperatur liegt, aufgeschmolzen und dann einer Sprühdüse zugeführt. Versuche mit einer Druckzerstäubung des Wachses bei einem Druck von 6 bar ergaben keine befriedigenden Ergebnisse. Die hiermit erzielten mittleren Tröpfchengrößen lagen über 100 μm. Eine Perlhärte von mehr als 0,15 N konnte in diesem Fall nur mit Wachsgehalten des Perlrußes von über 20 Gew.-% erhalten werden. Als geeignet für die Zwecke der Erfindung erwies sich die Verdüsung des Wachses mit einer Zweistoffdüse. Durch Verdüsen des Wachses mit Druckluft von 6 bar wurden mittlere Tröpfchengrößen von etwa 20 μm erhalten.

Neben der Art der Verdüsung des Wachses ist auch der Ort der Verdüsung von wesentlichem Einfluß auf die Qualität des sich bildenden Perlrußes. Wie schon eingangs geschildert, besteht eine Perlmaschine aus einem liegend angeordneten, feststehenden Rohr (Stator) mit einer sich darin drehenden Stachelwelle. Die Perlmaschine besitzt gewöhnlich einen Einlaufbereich, in dem der pulverförmige Ausgangsruß der Perlmaschine zugeführt wird. In diesem Bereich befindet sich eine Förderschnecke, die dem zugeführten Ruß eine Bewegungskomponente in axialer Richtung aufprägt. An den Einlaufbereich schließt sich der eigentliche Granulationsbereich an, in dem der Ruß durch mechanische Einwirkung der sich drehenden Stacheln und durch Abrollen an der Innenwand des Stators agglomeriert. Nach Verlassen des Granulationsbereiches gelangt der nun schon perförmige Ruß in den Auslaufbereich und wird aus der Perlmaschine kontinuierlich ausgeschleust.

Je nach Konstruktion der Perlmaschine können die einzelnen Bereiche der Perlmaschine unterschiedliche Größen aufweisen. In jedem Fall sollten Einlauf- und Auslaufbereich zu Gunsten des Granulationsbereichs möglichst klein gehalten werden. Nach Eintritt des pulverförmigen Ausgangsrußes in den Granulationsbereich beginnt die Agglomeration des Rußes und ist am Ende dieses Bereiches abgeschlossen. Um eine möglichst homogene Verteilung des Wachses über den gesamten Querschnitt der Rußperlen zu erhalten, ist es erforderlich, den Wachs im ersten Drittel des Granulationsbereiches über den Ruß zu verdüsen. Die Einbringung des Wachses in einem späteren Stadium der Perlbildung führt zu einem inhomogenen Aufbau der Rußperlen und damit zu einer verringerten Perlhärte.

Eine weitere Verbesserung der Homogenität der Einmischung des Wachses in den Ruß erhält man, wenn zur Verdüsung mehrere Sprühdüsen eingesetzt werden, die in einer Ebene senkrecht zur Stachelwelle am Umfang des Stators verteilt sind. Die Zahl der Düsen wird zweckmäßiger Weise auf zwei bis fünf begrenzt. Die Düsen werden dabei in einer Ebene senkrecht zur Stachelwelle angeordnet, um eine gute Homogenität der Einmischung zu gewährleisten. Ein axialer Versatz der Sprühdüsen hätte nämlich zur Folge, daß das Wachs der verschiedenen Düsen in den Ruß zu unterschiedlichen Agglomerationsstadien eingemischt würde.

Wie weiter oben ausgeführt wurde, beträgt die bevorzugte Verweilzeit des Rußes in der Perlmaschine 20 bis 600 Sekunden. Die mittlere Verweilzeit $\bar{t}$ ist mit dem Mengendurchsatz $\dot{m}$ und der Füllmenge $m_f$ der Perlmaschine über folgende Beziehung verknüpft:

$$\dot{m} = m_f / \bar{t}.$$

Der Mengendurchsatz einer Perlmaschine ist bei vergleichbarer Größe der Perlräume wesentlich größer als der Mengendurchsatz einer Perltrommel. Die Ursache hierfür ist die wesentlich geringere Verweilzeit des Perlgutes in der Perlmaschine. Es ist überraschend, daß im Granulator trotz der geringen Verweilzeiten die spontane Agglomeration der Ruße einsetzt. Möglich wird dies durch Wahl von Betriebsbedingungen (Verweilzeit und Umfangsgeschwindigkeit der Stachelspitzen), die unüblich für den normalen Betrieb der Perlmaschine bei der Naßgranulation sind.

Der Pulverruß wird dem Granulationsbereich der Perlmaschine gewöhnlich mit Hilfe einer Förderschnecke zugeführt. Der Rußdurchsatz beziehungsweise Mengendurchsatz der Perlmaschine ist daher gleich der Förderrate der Förderschnecke und kann somit in weiten Grenzen eingestellt werden. Füllmenge und Verweilzeit können durch Anheben des Auslaufbereiches gegenüber dem Einlaufbereich verlängert werden. Der sich dabei ergebende Winkel zwischen der Achse der Perlmaschine und der Horizontalen kann etwa zwischen 0 und 15° verändert werden.

Füllmenge und Verweilzeit werden weiterhin durch die Drehzahl der Stachelwelle beeinflußt. Bei gleichbleibender Rußzufuhr (konstanter Rußdurchsatz) verringern sich mit steigender Drehzahl die Füllmenge und Verweilzeit proportional zueinander.

Die bevorzugten Verweilzeiten für die Herstellung des erfindungsgemäßen Perlrußes liegen im Bereich zwischen 20 und 180 Sekunden. Unterhalb von 20 Sekunden ist der Agglomerationsvorgang noch nicht in ausreichendem Maße fortgeschritten, und der Perlruß weist daher noch einen hohen Feinanteil von mehr als 20 % auf. Verweilzeiten von mehr als 600 Sekunden sind gewöhnlich wegen der nach oben begrenzten Füllmenge nur bei geringen Rußdurchsätzen möglich.

Mit dem beschriebenen Herstellverfahren können prinzipiell alle Rußtypen verperlt werden. Es hat sich gezeigt, daß Ruße mit niedriger spezifischer Oberfläche und niedriger Struktur sehr gut verperlbar sind. Ruße mit hoher spezifischer Oberfläche und hoher Struktur sind gut zu verperlen. Dagegen sind Ruße mit hoher spezifischer Oberfläche und niedriger Struktur und Ruße mit niedriger spezifischer Oberfläche und hoher Struktur schwer zu granulieren. Zur Einleitung der Agglomeration ist es daher zweckmäßig, dem Pulverruß Perlruß als Agglomerationskeime (im folgenden auch als Impfgut bezeichnet) beizumengen. Bevorzugt wird Perlruß derselben Rußtype, die verperlt werden soll, eingesetzt. Abhängig von den Perleigenschaften des Rußes können ihm bis zu 50 Gew.-% Perlruß zugemischt werden. Bevorzugt wird der Perlruß in einer Menge von 5 bis 15 Gew.-% dem Pulverruß zugemischt. Bei leicht zu verperlenden Rußtypen kann die Zugabe von Perlruß ganz unterbleiben oder kurze Zeit nach Beginn der Granulation beendet werden. In jedem Fall beeinflußt die Zugabe des Wachses jedoch die Verperlung in positiver Weise.

Eine weitere Verbesserung der Verperlung kann erzielt werden, wenn der Pulverruß auf Stampfdichten im Bereich zwischen 150 und 300 g/l verdichtet wird, bevor er der Perlmaschine zugeführt wird. Die Vorverdichtung kann in bekannter Weise zum Beispiel mit Hilfe von Vakuumfilterwalzen vorgenommen werden.

Im folgenden wird die Erfindung anhand einiger Beispiele erläutert. Es zeigen

Figur 1: Granulator mit Stachelwelle zur Herstellung des erfindungsgemäßen Perlrußes.

Figur 2: Verfahrensfließbild zur Herstellung des erfindungsgemäßen Perlrußes.

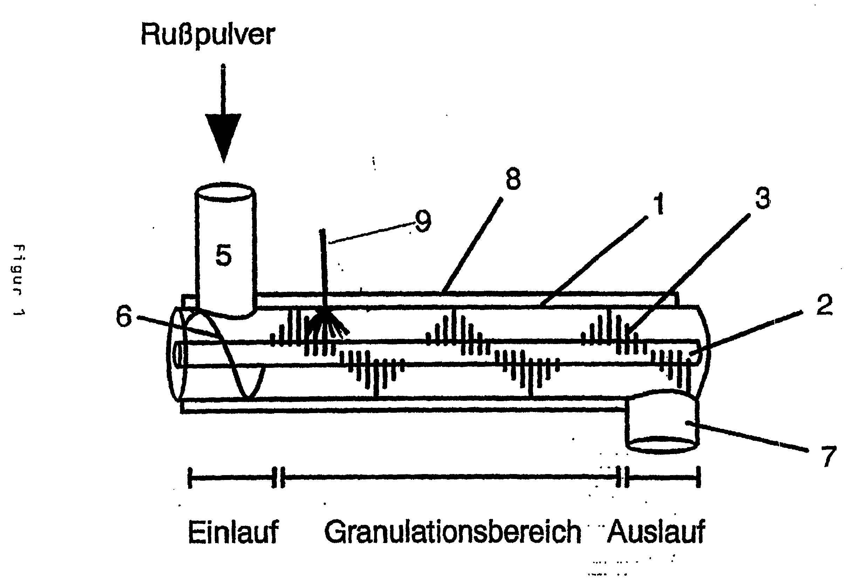

Der erfindungsgemäße Perlruß kann mit einer Perlmaschine hergestellt werden. Der Aufbau einer solchen Perlmaschine ist schematisch in Figur 1 dargestellt. Die Perlmaschine besteht aus einem liegend angeordneten feststehenden Rohr 1, dem Stator, und einer darin axial angeordneten sich drehenden Stachelwelle 2 mit den wendelförmig angeordneten Stacheln 3. Zwischen der Stachelwelle 2 und dem Stator 1 befindet sich der Perlraum der Perlmaschine. Der Pulverruß wird dem Granulator am Einlauf 5 zugeführt. Im Bereich des Einlaufs befindet sich auf der Stachelwelle eine Förderschnecke 6, die den Pulverruß in axialer Richtung zum Auslauf 7 fördert. Der Stator 1 ist doppelwandig ausgeführt und erlaubt die Temperierung der Statorwandung mit Hilfe einer Flüssigkeit 8. Im ersten Drittel des Granulationsbereiches des Stators befinden sich auf seiner Oberseite Durchgangsbohrungen, durch die Sprühdüsen 9 für die Zugabe des Wachses eingeführt werden.

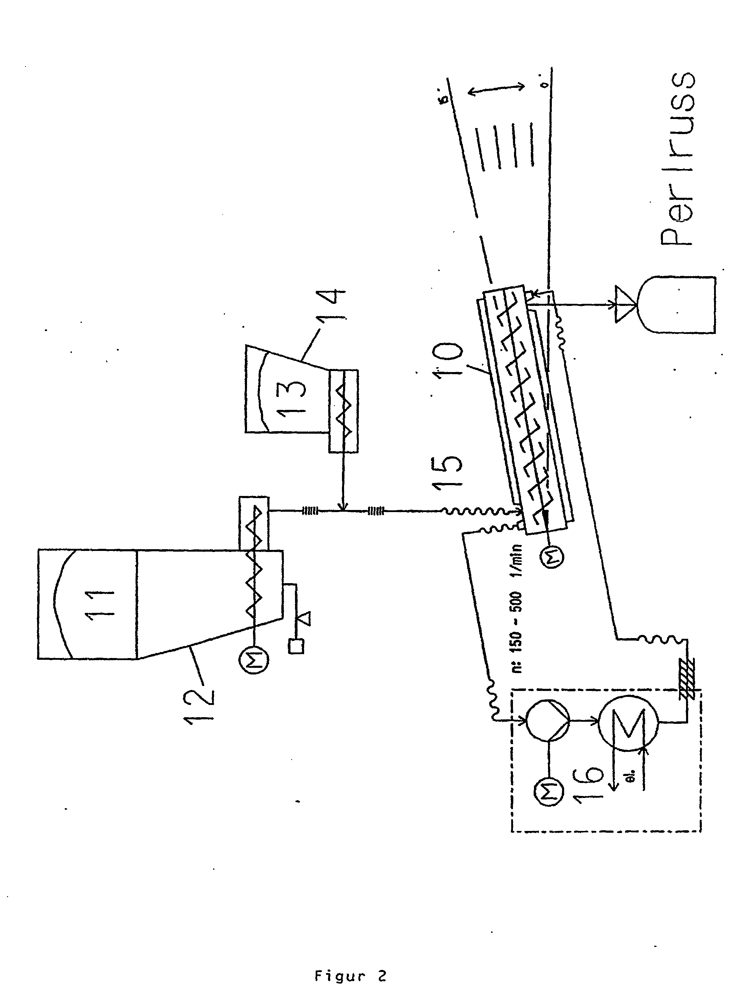

Figur 2 zeigt das Verfahrensfließbild für die Herstellung des erfindungsgemäßen Perlrußes. Die Perlmaschine 10 kann mit ihrer Achse zur Einstellung der Verweilzeit gegenüber der Horizontalen um einen Neigungswinkel von 0 bis 15° geneigt werden. Hierzu wird der Auslauf der Perlmaschine gegenüber dem Einlauf entsprechend angehoben. Pulverruß 11 und gegebenenfalls Impfgut 13 werden aus den Vorlagebehältern 12 und 14 dem Einlauf 15 der Perlmaschine 10 zugeführt. Der Stator der Perlmaschine wird mit Hilfe des Thermostaten 16 auf eine gewünschte Temperatur eingestellt.

**Patentansprüche**

1. Perlruß, welcher wenigstens ein Paraffinwach enthält und der durch Verperlen eines pulverförmigen Ausgangsrußes gewonnen wurde,
   **dadurch gekennzeichnet,**
   **daß** der Gehalt des Perlrußes an Wachsen 1 bis weniger als 10 Gew.-%, bezogen auf das Gesamtgewicht des Perlrußes, beträgt und daß die Einzelperlhärte des Perlrußes größer als 0,15 N ist.

2. Perlruß nach Anspruch 1,
   **dadurch gekennzeichnet,**
   **daß** der Ausgangsruß eine DBP-Adsorption zwischen 40 und 250 ml/100 g und eine Stickstoff-Oberfläche von 5 bis 500 m$^2$/g aufweist.

3. Verfahren zur kontinuierlichen Herstellung von Perlruß nach Anspruch 1 in einer beheizten Perlmaschine mit Stachelwelle, wobei die Perlmaschine einen Einlaufbereich, einen Granulationsbereich und einen Auslaufbereich aufweist, durch Zuführen von Pulverruß in den Einlaufbereich der Perlmaschine, Zugeben des geschmolzenen Wachses oder der geschmolzenen Wachsmischung und kontinuierliches Entnehmen des verperlten Rußes am Auslauf der Perlmaschine,
**dadurch gekennzeichnet,**
**daß** der Wachs oder die Wachsmischung im ersten Drittel des Granulationsbereichs der Perlmaschine über den noch pulverförmigen Ausgangsruß mit einer mittleren Tröpfchengröße von nicht mehr als 50 μm verdüst wird, wobei die maximale Umfangsgeschwindigkeit der Stacheln zwischen 1 und 6 m/s beträgt und die mittlere Verweilzeit des Rußes in der Perlmaschine auf einen Wert zwischen 20 und 600 Sekunden eingestellt wird.

4. Verfahren nach Anspruch 3,
**dadurch gekennzeichnet,**
**daß** die Wachsmischung mit Hilfe von 2 bis 5 Düsen über den noch pulverförmigen Ausgangsruß verdüst wird, wobei die Düsen in einer Ebene senkrecht zur Achse der Stachelwelle angeordnet sind.

5. Verfahren nach Anspruch 4,
**dadurch gekennzeichnet,**
**daß** dem Pulverruß bis 50, bevorzugt 5 bis 30 Gew.-%, vorverdichteter Ruß als Impfgut zugemischt werden.

6. Verfahren nach Anspruch 4,
**dadurch gekennzeichnet,**
**daß** der Pulverruß vor dem Granulieren auf eine Stampfdichte von 150 bis 300 g/l vorverdichtet wird.

## Claims

1. Carbon black pellets which comprise at least one paraffin wax and which have been obtained by pelletization of a powdered starting carbon black,
**characterised in that**
the wax content of the carbon black pellets is from 1 to less than 10 wt.%, based on the total weight of the carbon black pellets, and **in that** the individual pellet hardness of the carbon black pellets is greater than 0.15 N.

2. Carbon black pellets according to claim 1,
**characterised in that**
the starting carbon black has a DBP adsorption of from 40 to 250 ml/100 g and a nitrogen surface area of from 5 to 500 $m^2$/g.

3. Process for the continuous production of carbon black pellets according to claim 1 in a heated pelletizing machine having a spiked shaft, the pelletizing machine having an inlet region, a granulation region and an outlet region, by feeding carbon black powder into the inlet region of the pelletizing machine, adding the molten wax or the molten wax mixture and continuously removing the pelletized carbon black at the outlet of the pelletizing machine,
**characterised in that**
the wax or the wax mixture is atomized in the first third of the granulation region of the pelletizing machine over the starting carbon black, which is still in powder form, with an average droplet size not exceeding 50 μm, the maximum circumferential speed of the spikes being from 1 to 6 m/s and the average residence time of the carbon black in the pelletizing machine being adjusted to a value of from 20 to 600 seconds.

4. Process according to claim 3,
**characterised in that**
the wax mixture is atomized over the starting carbon black, which is still in powder form, with the aid of from 2 to 5 nozzles, the nozzles being arranged in a plane perpendicular to the axis of the spiked shaft.

5. Process according to claim 4,
**characterised in that**
up to 50 wt.%, preferably from 5 to 30 wt.%, of pre-compressed carbon black is mixed with the carbon black powder as inoculum.

6. Process according to claim 4,
**characterised in that**
the carbon black powder is pre-compressed to a tamped density of from 150 to 300 g/l before being granulated.

## Revendications

1. Noir de fumée en forme de perles contenant au moins une cire de parafflne et obtenue à partir d'un noir de fumée de départ, à l'état de poudre, par transformation en perles,
**caractérisé en ce que**
la teneur du noir de fumée en perles en cire est de 1 à moins de 10 % en poids par rapport au poids total du noir de fumée en perles et la dureté d'une perle prise isolément du noir de fumée en perles est supérieure à 0,15 N.

2. Noir de fumée en perles selon la revendication 1,
**caractérisé en ce que**
le noir de fumée de départ a une adsorption DBP comprise entre 40 et 250 ml/100 g et une surface d'azote de 5 à 500 $m^2$/g.

3. Procédé de fabrication en continu de noir de fumée en perles selon la revendication 1 avec une machine de granulation chauffée ayant un arbre hérisson, la machine de granulation ayant une zone d'entrée, une zone de granulation et une zone de sortie. par fourniture de noir de fumée en poudre à la zone d'entrée de la machine de granulation, par addition de cire fondue ou d'un mélange de cire fondue et par prélèvement continu du noir de fumée transformé en perles à la sortie de la machine de granulation,

**caractérisé en ce qu'**

on pulvérise la cire ou le mélange de cire dans le premier tiers de la zone de granulation de la machine de granulation sur le noir de fumée de départ encore à l'état de poudre avec une dimension de gouttelettes qui ne dépasse pas 50 μm, et la vitesse périphérique maximale des pointes est située entre 1 et 6 m/s et le temps de séjour moyen du noir de fumée dans la machine de granulation est réglé à une valeur comprlse entre 20 et 600 secondes.

4. Procédé selon la revendication 3,
   **caractérisé en ce que**
   le mélange de cire est pulvérisé à l'aide de deux à cinq buses sur le noir de fumée de départ encore à l'état de poudre, les buses étant Installées dans un plan perpendiculaire à l'axe de l'arbre hérisson.

5. Procédé selon la revendication 4,
   **caractérisé en ce qu'**
   on ajoute comme germe jusqu'à 50 % en poids et de préférence entre 5 et 30 % en poids au noir de fumée en poudre.

6. Procédé selon la revendication 4,
   **caractérisé en ce qu'**
   avant de granuler on pré-comprime le noir de fumée en poudre à une densité de compactage de 150-300 g/l.

Figur 1

Figur 2